# EUROPEAN PATENT SPECIFICATION

(11) **EP 3 302 753 B1**
(45) Date of publication and mention of the grant of the patent: **24.07.2019**
(21) Application number: 16725838.3
(22) Date of filing: 25.05.2016
(51) Int. Cl.: B01D 45/08

(54) **DROPLET SEPARATOR WITH REDIRECTION AND METHOD OF PRODUCING SAID SEPARATOR**
TROPFENABSCHEIDER MIT UMLENKUNG UND VERFAHREN ZUR HERSTELLUNG DIESES ABSCHEIDERS
SÉPARATEUR DE GOUTTELETTES QUI PERMET DE REDIRIGER LESDITES GOUTTELETTES, ET PROCÉDÉ DE PRODUCTION DUDIT SÉPARATEUR

(30) Priority: 28.05.2015 DE 102015209847
(43) Date of publication of application: 11.04.2018
(73) Proprietor: Efficient Energy GmbH, 85622 Feldkirchen (DE)
(72) Inventor: SEDLAK, Holger, 82054 Lochhofen / Sauerlach (DE); KNIFFLER, Oliver, 82054 Sauerlach (DE)
(74) Representative: Zinkler, Franz
(86) International application number: PCT/EP2016/061841
(87) International publication number: WO 2016/189054

(56) References cited:
- WO-A1-2012/041665
- CN-A- 101 791 505
- FR-A1- 2 364 678
- US-A- 4 877 431
- US-A1- 2009 071 337

## Description

The present invention relates to droplet separators and in particular to droplet separators for using heat pumps and heat pumps that can be employed for heating or cooling buildings or for heating or cooling other objects.

Figs. 9A and Fig. 9B provide a heat pump as is presented in European Patent EP 2016349 B1.

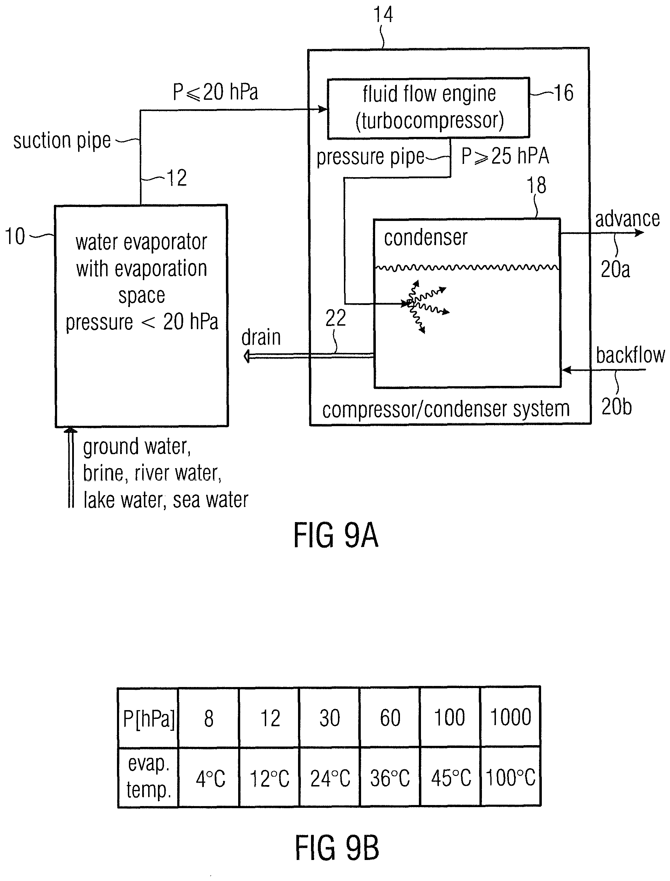

Fig. 9A shows a heat pump initially comprising a water evaporator 10 for evaporating water as a working liquid so as to generate vapor within a working vapor pipe 12 on the output side. The evaporator includes an evaporation space (evaporation chamber) (not shown in Fig. 9A) and is configured to generate an evaporation pressure smaller than 20 hPa within said evaporation space, so that at temperatures below 15°C within the evaporation space, the water will evaporate. The water preferably is ground water, brine, i.e. water having a certain salt content, which freely circulates in the earth or within collector pipes, river water, lake water or sea water. In accordance with the invention, any types of water, i.e. limy water, lime-free water, salty water or salt-free water, are preferred. This is due to the fact that any types of water, i.e. all of said "water materials" have the favorable water property that water, which is also known as "R 718", has an enthalpy difference ratio of 6 that can be used for the heat pump process, which corresponds to more than double the typical enthalpy difference ratio of, e.g., R134a.

Through the suction pipe 12, the water vapor is fed to a compressor/condenser system 14 comprising a fluid flow engine such as a radial compressor, for example in the form of a turbocompressor, which is designated by 16 in Fig. 9A. The fluid flow engine is configured to compress the working vapor to a vapor pressure at least larger than 25 hPa. 25 hPa corresponds to a condensation temperature of about 22 °C, which may already be a sufficient heating flow temperature of an underfloor heating system. In order to generate higher flow temperatures, pressures larger than 30 hPa may be generated by means of the fluid flow engine 16, a pressure of 30 hPa having a condensation temperature of 24 °C, a pressure of 60 hPa having a condensation temperature of 36 °C, and a pressure of 100 hPa having a condensation temperature of 45 °C. Underfloor heating systems are designed to be able to provide sufficient heating with a flow temperature of 45 °C even on very cold days.

The fluid flow engine is coupled to a condenser 18 configured to condense the compressed working vapor. By means of the condensing process, the energy contained within the working vapor is fed to the condenser 18 so as to then be fed to a heating system via the advance 20a. Via the backflow 20b, the working liquid flows back into the condenser.

In accordance with the invention, it is preferred to directly withdraw the heat (energy), which is absorbed by the heating circuit water, from the high-energy water vapor by means of the colder heating circuit water, so that said heating circuit water heats up. In the process, a sufficient amount of energy is withdrawn from the vapor so that said stream is condensed and also is part of the heating circuit.

Thus, introduction of material into the condenser and/or the heating system takes place which is regulated by a drain 22 such that the condenser in its condenser space has a water level which always remains below a maximum level despite the continuous supply of water vapor and, thus, of condensate.

As was already explained, it is preferred to use an open circuit, i.e. to directly evaporate the water, which represents the heat source, without using a heat exchanger. However, alternatively, the water to be evaporated might also be initially heated up by an external heat source via a heat exchanger. In this context one has to take into account, however, that this heat exchanger again represents losses and expenditure in terms of apparatus.

In addition, it is preferred - in order to also avoid losses for the second heat exchanger, which has necessarily been present on the condenser side - to directly use the medium there, too, i.e., when one thinks of a house comprising an underfloor heating system, to directly circulate the water coming from the evaporator within the underfloor heating system.

Alternatively, however, a heat exchanger supplied by the advance 20a and exhibiting the backflow 20b may also be arranged on the condenser side, said heat exchanger cooling the water present within the condenser and thus heating up a separate underfloor heating liquid, which typically will be water.

Due to the fact that water is used as the working medium and due to the fact that only that portion of the ground water that has been evaporated is fed into the fluid flow engine, the degree of purity of the water does not make any difference. Just like the condenser and the underfloor heating system, which is possibly directly coupled, the fluid flow engine is always supplied with distilled water, so that the system has reduced maintenance requirements as compared to today's systems. In other words, the system is self-cleaning since the system only ever has distilled water supplied to it and since the water within the drain 22 is thus not contaminated.

In addition, it shall be noted that fluid flow engines exhibit the property that they - similar to the turbine of a plane - do not bring the compressed medium into contact with problematic substances such as oil, for example. Instead, the water vapor is merely compressed by the turbine and/or the turbocompressor, but is not brought into contact with oil or any other medium impairing purity, and is thus not soiled.

The distilled water discharged through the drain thus can readily be re-fed to the ground water - if this does not conflict with any other regulations. Alternatively, it can also be made to seep away, e.g. in the garden or in an open space, or it can be fed to a sewage plant via the sewer system if this is required by regulations.

Due to the combination of water as the working medium with the enthalpy difference ratio, the usability of which is double that of R134a, and due to the thus reduced requirements placed upon the closed nature of the system (rather, an open system is preferred) and due to the utilization of the fluid flow engine, by means of which the required compression factors are efficiently achieved without any impairments in terms of purity, an efficient and environmentally neutral heat pump process is provided which becomes even more efficient when the water vapor is directly condensed within the condenser since, as result, not a single heat changer will be required anymore in the entire heat pump process.

Fig. 9B shows a table for illustrating various pressures and the evaporation temperatures associated with said pressures, which results in that relatively low pressures are to be selected within the evaporator in particular for water as the working medium.

To achieve a highly efficient heat pump it is important for all components, i.e. the evaporator, the condenser and the compressor, to be configured in an advantageous manner.

On the other hand, it is highly important that the heat pump has high long-term stability since it needs to run for a very long time, depending on the application, without a damage occurring and/or without maintenance being required.

In particular when water is used as the working medium and when a fluid flow engine such as a turbocompressor or a radial compressor, for example, is used for compressing, relatively high rotational speeds of the compressor wheel are required.

On the other hand, the fact that the outcome of the evaporation is not only pure vapor, but vapor and, additionally, droplets of the working liquid is problematic. However, if said droplets of the working liquid impinge, within the compressor, on the radial wheel that is rotating very fast, damage to the radial wheel may occur, which may be avoided by reducing the evaporation efficiency within the evaporator, by setting the parameters within the evaporation space such that the liquid to be evaporated within the evaporator space does not move too much. However, this has the disadvantage that the efficiency within the evaporator decreases and that a larger volume becomes necessary for obtaining an amount of vapor that is sufficient for obtaining a necessary performance of the heat pump.

Another possibility consists in providing a droplet separator which ensures that the vapor reaching the radial wheel contains no or only a very small number of droplets.

However, what is important about this droplet separator is that the separator itself does not entail any particularly large losses. If the droplet separator represents a large resistance to the vapor, said resistance must be compensated for by an even higher rotational speed of the compressor, which in turn is problematic in terms of efficiency and volume. It has turned out, for example, that droplet separators in the form a web of plastic threads are simple and low-cost in terms of manufacture and design, but nevertheless allow drops to penetrate, which may lead to the problems in the radial wheel, on the one hand, and which will represent a relatively large resistance to the vapor, on the other hand, if they are designed not to allow any more droplets, or only a very small number of drops, to pass.

DE 102012220186 A1 discloses a droplet separator comprising a plurality of curved lamellae and a holder for holding the curved lamellae at a distance from one another. In particular, each lamella of the plurality of lamellae forms a complete ring, or the lamellae are circular or elliptical and arranged in parallel with one another. Each lamella may represent a sector of a spherical shell. In addition, the droplet separator includes an upper half and a lower half, the upper and lower halves being identical with and joined to each other. The droplet separator includes an upper side which faces a suction mouth of a compressor in a working position of the droplet separator. In addition, the lamellae are configured such that tangents located at the lamellae on the upper side point toward a central region of the suction mouth, so that a flow direction of a vapor flowing through the droplet separator is directed toward the central region of the suction mouth.

CN 101791505 discloses a concept for a composed mist eliminator for the purpose of controlling air pollution. The device includes a mist eliminator of a first stage and a mist eliminator of a second stage. In particular, the lamellae of the mist eliminator have a V shape, both in the upper and in the lower stages. In addition, the first stage and the second stage are rotated.

It is the object of the present invention to provide an improved droplet separator concept. This object is achieved by a droplet separator as claimed in claim 1, an evaporator/compressor combination as claimed in claim 14 and a method of producing a droplet separator as claimed in claim 16.

A droplet separator includes a first number of blades arranged on a first carrier. Each blade of the first number of blades has a first portion and a second portion, between which an obtuse angle is formed. In addition, a second number of blades is provided which are arranged on a second carrier, each blade of the second number of blades comprising a first portion and a second portion, between which an obtuse angle is formed as well. The first and second carriers are joined such that a blade of the second number of blades is arranged between the two blades of the first number of blades, i.e. so that both numbers of blades are arranged in a mutually interleaved manner. In particular, the blades of the first number of blades are connected only to the first carrier and are not connected to the second carrier. Likewise, the blades of the second number of blades are connected only to the second carrier but are not connected to the first carrier. This means that the droplet separator comprises, when the first and second carriers are joined, a number of blades that is equal to the sum of the first number of blades of the first carrier and the second number of blades of the second carrier.

The first number of blades extend radially outward from the first carrier. Accordingly, the second member of blades also extends radially outward from the second carrier, so that a droplet separator having a relatively circular shape results which has a central region which is formed by the first and second carriers and from which the first and second numbers of blades extend outward. By providing the obtuse angle, which may range from 90° to 180°, between the first portion and the second portion, one ensures that droplet separation function is achieved. Said droplet separation function is based, for example, on the fact that the respective second portions of adjacent blades "overlap".

In a one-piece implementation, such a structure could not be produced or could be produced only with particularly complicated expenditure, in particular in case of production by means of an injection-molding device. By means of injection molding methods, but also by means of other methods, such structures that are heavily undercut cannot be produced, or can only be produced with a very large amount of expenditure and, resulting therefrom, a relatively large number of rejects. If the two carriers comprising the corresponding blades are produced separately from one another, however, the distance of the individual blades is allowed to be relatively large, and in particular each individual carrier need not necessarily achieve a droplet separation function since direct passages from the one side of the droplet separator to the other side of the droplet separator are possible on account of droplet trajectories.

By joining the two carriers and the associated numbers of blades, however, the droplet separation function is achieved. Due to the fact that the entire droplet separator is produced from two or even more individual carriers, however, simple produceability with high efficiency, a small number of rejects and low tolerances is enabled.

Preferred embodiments of the present invention will be explained in detail below with reference to the accompanying drawings, wherein:
- Fig. 1: shows a schematic view of a first carrier comprising a first number of blades, a schematic view of a second carrier comprising a second number of blades an interleaved arrangement in a working position, i.e. when the first and second carriers are joined;
- Fig. 2: shows a schematic view of a first carrier, of a second carrier separate from the first carrier, and of both carriers comprising interleaved blades and the corresponding gas flow with and without any droplets;
- Fig. 3A: shows a lateral view of an upper part (first carrier) of the droplet separator in accordance with an embodiment;
- Fig. 3B: shows a top view of the upper part of Fig. 3A;
- Fig. 4A: shows a lateral view of a lower part of a droplet separator in accordance with an embodiment;
- Fig. 4B: shows a bottom view of the lower part of the droplet separator;
- Fig. 5A: shows a top view of the droplet separator with the upper and lower parts joined;
- Fig. 5B: shows a lateral view of the droplet separator with the first and second carriers joined;
- Fig. 6A: shows a schematic blade view;
- Fig. 6B: shows a sectional view of a blade;
- Fig. 7: shows a sequence of assembling the first carrier and the second carrier for producing the droplet separator;
- Fig. 8: shows a schematic evaporator/compressor combination;
- Fig. 9A: shows a schematic heat pump in accordance with the prior art; and
- Fig. 9B: shows a table with pressures for the heat pump of Fig. 9A.

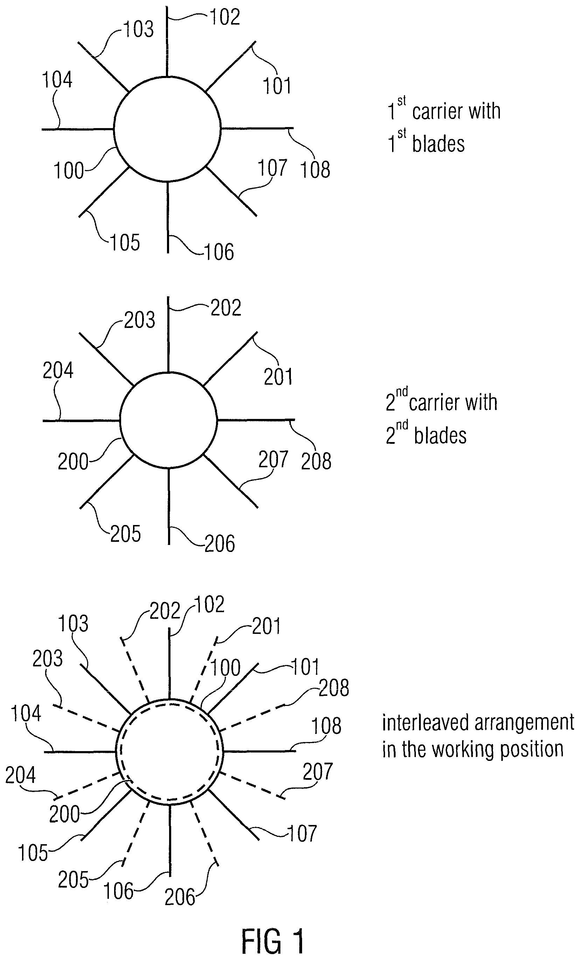

Fig. 1 shows a droplet separator comprising a first carrier 100 and a first number of blades 101 to 108 arranged at the first carrier. The embodiment shown in Fig. 1 is a relatively round, almost radially symmetric droplet separator, so that each blade 101 to 108 extends radially outward from the first carrier 100. What is not shown in Fig. 1 is that each blade has a first portion and a second portion, which have an obtuse angle formed between them. Fig. 1 further shows a second carrier 200 comprising a second number of blades 201 to 208 attached to the second carrier 200 and in the embodiment shown in Fig. 1, which here is round, also extend radially outward. In addition, each blade of the second number of blades in turn has a first portion and a second portion, which have an obtuse angle arranged between them.

The bottom view of Fig. 1 shows the interleaved assembly in a working position, so that the first carrier and the second carrier are joined such that a blade of the second number of blades is arranged between two blades of the first number of blades. For illustration purposes, the second blades 201 to 208 are drawn in dashed lines in the bottom view. Thus, the second carrier 200 is also drawn in dashed lines. In addition, the first carrier 100 and the first blades are drawn in continuous lines. As a result, the distance between the adjacent blades of the two different carriers, in terms of the individual carrier, is relatively large, namely a 45 degrees segment in the embodiment shown, whereas in the interleaved arrangement, the angular separation is merely a 22.5 degrees segment. Thus, the first carrier and the second carrier are considerably easier to produce than if the entire interleaved arrangement were produced in one piece, i.e. with one single carrier to which all of the blades are attached.

However, in the droplet separator in accordance with the present invention, the first blades are attached to the first carrier only and are not attached to the second carrier, and the second blades are attached to the second carrier only and are not attached to the first carrier, and the two carriers are joined so as to achieve the interleaved arrangement in the working position, which is shown at the bottom of Fig. 1.

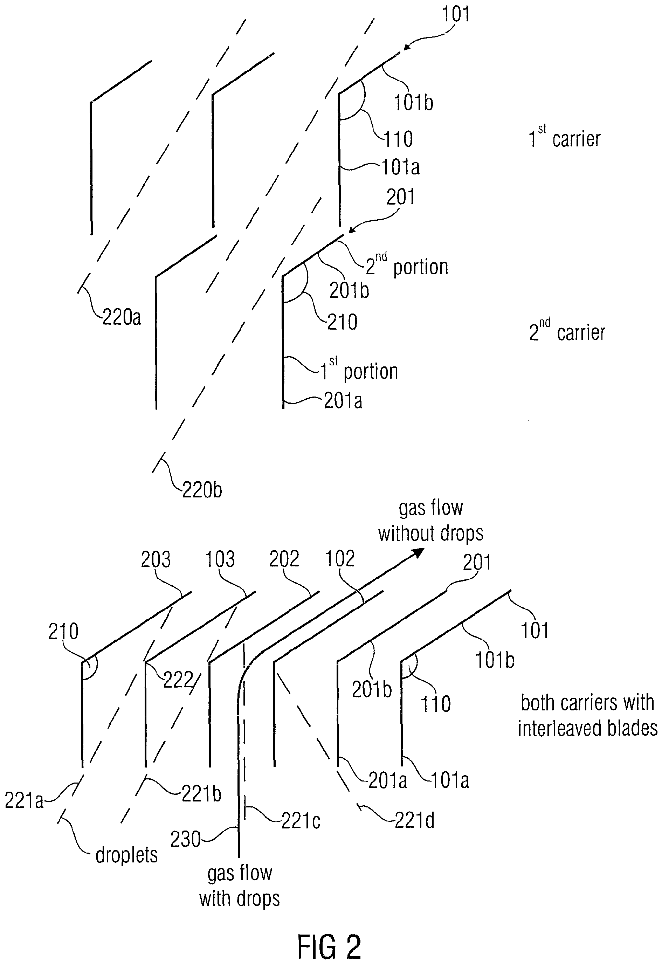

Fig. 2 shows an arrangement of the blades of the first carrier 101. For example, a blade of the first number of blades includes the first portion 101a and the second portion 101b, which have the first obtuse angle 110 formed between them. In addition, the central view of Fig. 2 shows the second carrier having the blade 201, by way of example, which in turn comprises the first portion 201a and the second portion 201b and the obtuse angle 210. Moreover, droplet trajectories 220a passing through the adjacent blades of the first carrier and 220b passing through adjacent blades of the second carrier are shown. It is apparent that droplets can fly through adjacent blades of the first carrier and can also fly through adjacent blades of the second carrier. In particular, the droplets located on the trajectories 220a, 220b can pass the first carrier and the second carrier when the two carriers are separate from each other, i.e. when they do not perform, when considered individually, the droplet separation function. However, if the two carriers are joined to the effect that a blade of the second number of blades is arranged between two blades of the first number of blades, i.e. that a blade 201 of the second carrier is arranged between the two blades 101, 102 of the first carrier, or that a blade 102 of the first carrier is arranged between the adjacent blades 201, 202 of the second carrier, droplets located on trajectories 221a, 221b, 221c and 221d can no longer pass the droplet separator. Instead, the droplets will either, provided that they come from the first portion, impinge on the corner 222 rather than passing through the droplet separator, or the droplets will impinge on a wall, i.e. on the first portion or the second portion, depending on how their trajectory is formed.

It is evident from the representation in Fig. 2 that the obtuse angle 110, 210 can be randomly selected, but that depending thereon, the length either of the first portion or of the second portion should be varied in order to obtain a droplet separation function. If the obtuse angle 210 becomes smaller, the second portion can become smaller as compared to an arrangement where the obtuse angle is larger. The second portion would have the smallest length if the obtuse angle was slightly larger than 90°. In this case, the second portion would only be slightly longer than a distance between two adjacent blades. However, the length of the second portion would become increasingly large the more the obtuse angle tends towards 180°.

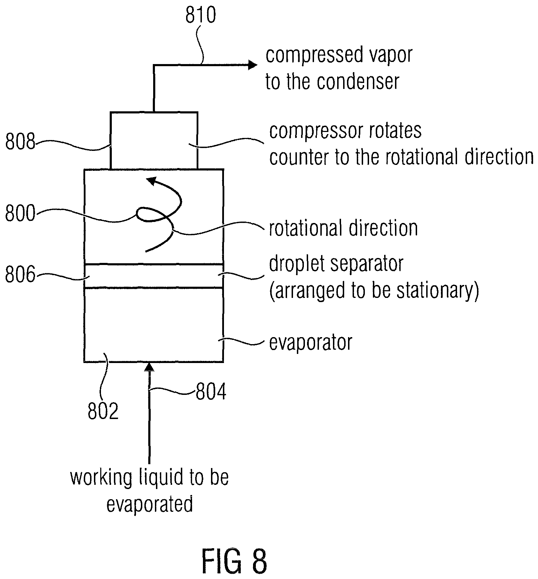

In preferred embodiments of the present invention, an obtuse angle ranging from 120° to 150° is preferred since this range of angles includes an ideal situation, namely in terms of the flow resistance, on the one hand, and the droplet separation function, on the other hand, and also in terms of the obtained rotation of the gas flow through the droplet separator, which rotation will be explained in more detail below The smaller the obtuse angle, i.e. the closer it is to 90°, the larger the flow resistance of the entire droplet separator will become, whereas the flow resistance would be at its smallest if the obtuse angle were almost 180°. In this case, however, the vertical length of the entire droplet separator would be very large. The range of angles from 120° to 150° therefore has proved to be most favorable, e.g. for employing the droplet separator in a heat pump, as depicted by means of Fig. 8.

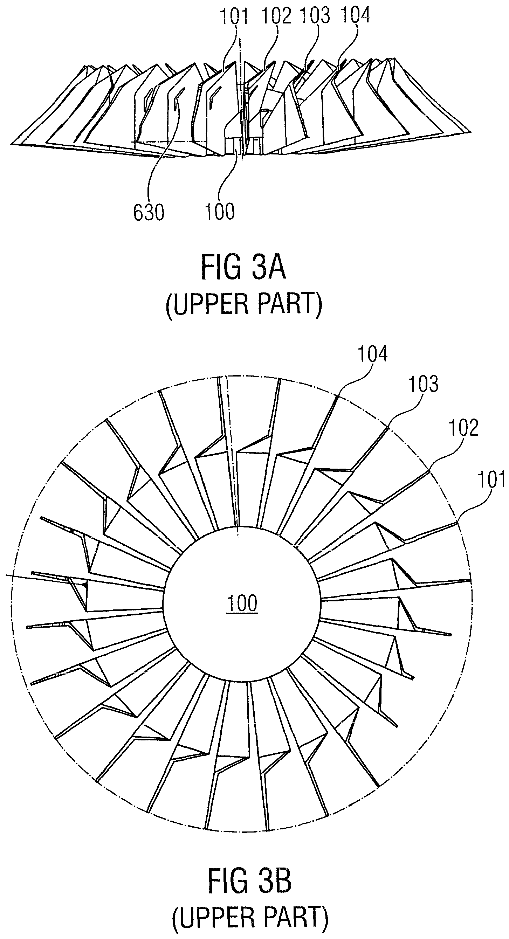

In addition, it is preferred, as also shown in Fig. 2, for the respective first portion 101a, 201a of a blade to be vertically arranged when the droplet separator is in the working position, i.e., to be arranged in the direction of the main gas flow as shown at 230. Generally, 230 shows the gas flow typically with drops, which gas flow is redirected by the corresponding second portions 201b, 101b, specifically to the right in the embodiment shown in Fig. 2. In the rotatory implementation of the droplet separator as will be presented below with reference to Figs. 3A to 5B, the gas flow is not only redirected to the right, but is made to rotate, which is favorable, in particular, for efficient evaporation since the gas flow, which is sucked in by the compressor connected downstream from the evaporator, will be considerably more stable than it would be if no rotation alignment were present.

Thus, the droplet separator is "opaque" when the first and second carriers have been joined, whereas both individual parts are not "opaque", i.e., comprise a direct passage from one side to the other.

The arrangement of the first and second portions of the blades to the effect that a corresponding obtuse angle is formed between the two portions is particularly advantageous in that the drops flying onto the portions cannot be accelerated upward but will either drip off downward directly where they impinge upon the droplet separator or will drip off downward in an oblique manner, for example on the oblique edge of the second portion 201b via the obtuse angle, and then flow back into the evaporator in a perpendicularly downward direction. The drops therefore fly onto the first or second portions of the blades in an almost unbreaked manner and are then directed downward, but are never directed upward.

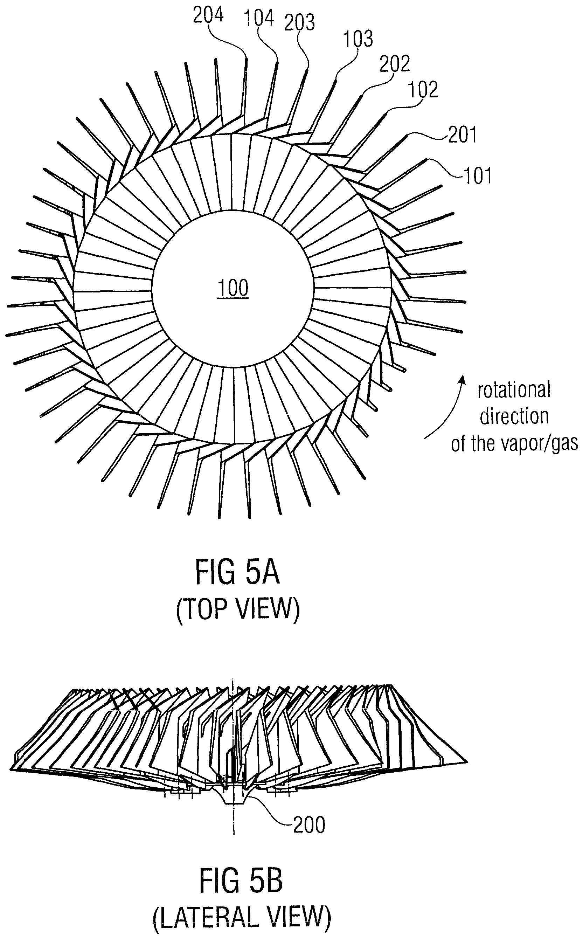

In the embodiments shown in the figures, the droplet separator is configured in two parts. It shall be noted that implementation in several parts is also possible, in which case each carrier will be connected to a correspondingly smaller number of blades. In the embodiments shown in Figs. 3A to 5B, a total of 48 blades are present, 24 blades being mounted on the first carrier and 24 blades being mounted on the other carrier. Likewise, however, a three-part form might also be selected wherein 16 blades are mounted on the first carrier, 16 blades are mounted on the second carrier and another 16 blades are mounted on a third carrier. By interleaving the three carriers again such that two blades of a number of blades have a blade of a different number of blades arranged between them, preferably in such a manner that the order of the blades located between two blades of the first carrier is always identical, for example, one will again obtain a droplet separator having 48 blades: When one moves in a direction of the droplet separator, so that a blade connected to the first carrier only is at the front, the blade adjacent thereto would be one connected to the second carrier only, and the blade adjacent to said blade, in turn, would be one of a third carrier, i.e., a blade connected to the third carrier only, etc.

Said two-part or multi-part embodiment comprising a first carrier, a second carrier and possibly a further carrier results in that the individual carrier/blade combinations are easy to produce and that a long-lived robust on-on tool can be used for plastics injection molding since no problematic undercuts must be cast.

The corresponding blades extend radially outward. In addition, it is preferred for the numbers of blades to be identical for each carrier. Moreover, it is preferred that for easy produceability the first number of blades be arranged on the first carrier such that a direct path between two blades is open. The same applies to the second number of blades. However, when the first and second carriers are joined, the direct path between two adjacent blades, i.e., between a blade of the first carrier and a blade of the second carrier, respectively, will be blocked.

As shown in Fig. 2, for example, a droplet separator comprises a first side, which is exposed to the drops, namely the lower side, where the first portions 101a, 102a are located. In addition, the second side comprising the second portions 101b, 201b faces the gas flow freed from the drops, as shown at 230 in Fig. 2. In addition, it is preferred for the first portions of the blades of the first and second numbers of blades to be arranged essentially in parallel with an overall gas flow on the first side, so that the gas flow is redirected by the second portions of the blades but is not redirected by the first portions of the blades. This is highly important for a particularly favorable flow resistance, i.e., a particularly low flow resistance, of the droplet separator.

In preferred embodiments, the first and second carriers are relatively rotationally symmetric, except for specific bores and/or for specific other constructional details, the second portions and/or the obtuse angles being shaped and formed such that the gas flow is redirected into a rotating gas flow by the second portions, as depicted at 800 in Fig. 8, for example.

As was already said, it is preferred for the blades and the carriers to be formed from a plastics injection molding material, it also being possible, however, to use other materials; the production will also become easier even if other materials and other methods of production are used, since a multi-part embodiment of the droplet separator has been employed.

Fig. 3A shows an upper part of a droplet separator comprising a number of blades 101, 102, 103, 104, all of which are mounted on the first carrier 100.

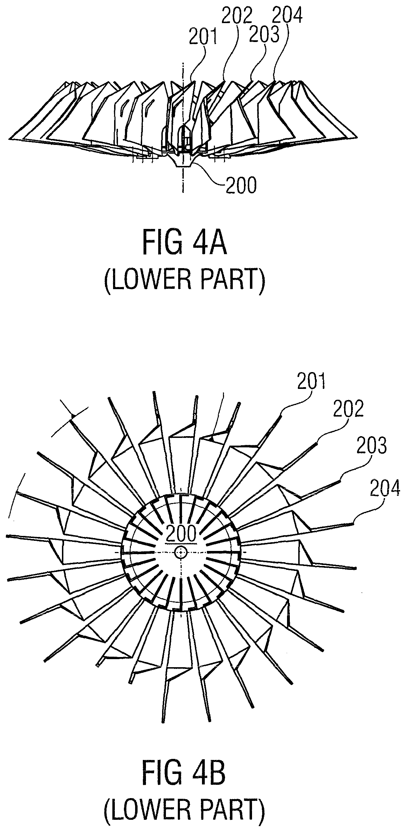

Fig. 3B shows a top view of the upper side, where the carrier 100 is depicted to be central and where the individual blades 101, 102, 103, 104 extend radially outward. However, the blades extending radially outward need not have the same lengths on all sides, as is shown, e.g., at the bottom right or top left in Fig. 3B, where slightly shorter blades are present. This may be due to corresponding shaping of the housing at which the droplet separator is arranged and is not crucial. Fig. 4A shows a lower part and/or the second carrier 200 again with blades 201, 202, 203, 204. Fig. 4B shows a bottom view of the carrier 200 and the blades 201, 202, 203, 204.

Fig. 5A shows the assembled droplet separator in the top view, whereas Fig. 5B shows the assembled droplet separator in the lateral view. As depicted in Figs. 3A to 5B, the first carrier 100 belongs to an upper part and/or an upper side of the droplet separator. In addition, it is preferred for the first carrier to have an upwardly vaulted shape, which is advantageous in that stable blade connections can be achieved. Moreover, the second carrier 200 has a shape that tapers toward the center and is also vaulted, as shown at 200 in Fig. 5B. Moreover, reinforcement ribs are arranged for reinforcing the blade connections, as can be seen in the bottom view of Fig. 4B.

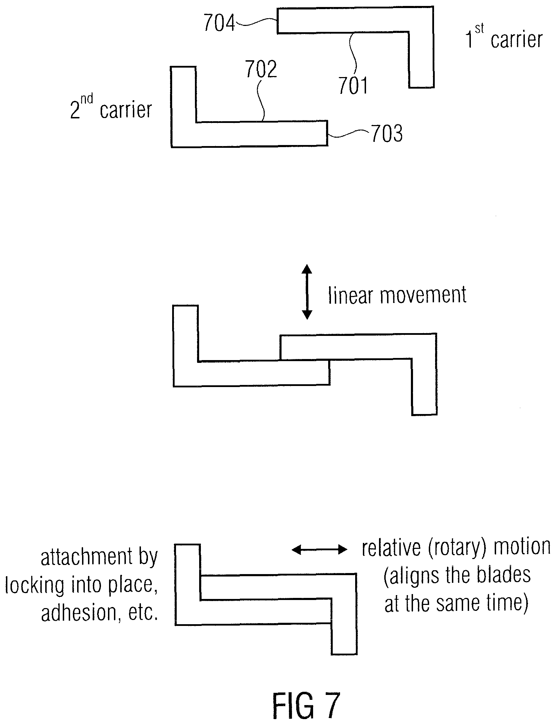

Joining of the first and second carriers is schematically depicted in Fig. 7. In the top view of Fig. 7, specific joining elements of the first and second carriers are shown separately from one another. The first and second carriers are then brought together by a linear movement so that surfaces 701, 702 provided for this purpose will abut, said surfaces being shaped such that the blades attached to the carriers thus will be arranged at the same level with regard to the height of the droplet separator. By means of a relative rotational movement performed until the rotational surfaces 703, 704 abut on the corresponding surfaces of the other carrier, the blades are aligned such that the distances between two blades of the one carrier and the respective blade of the other carrier are identical. By means of the relative rotational movement in the bottom view of Fig. 7, the blades are thus aligned at the same time. It is preferred for the two carriers to then remain in their working positions by locking into place. Alternatively, however, adhesion or any other connection of the first and second carriers may also be used for connecting the first and second carriers with each other in the working position in such a manner that the blades are aligned both in relation to one another and in terms of their individual heights.

In embodiments, the first and second carriers are configured such that the first carrier and the second carrier can be locked into place in relation to each other by a relative rotational movement; in the locked-in state, the blades of the first number and the blades of the second number are arranged in an interleaved manner and are further aligned such that the distances of one blade to the adjacent blades are essentially identical or are identical within a tolerance of at least 10%.

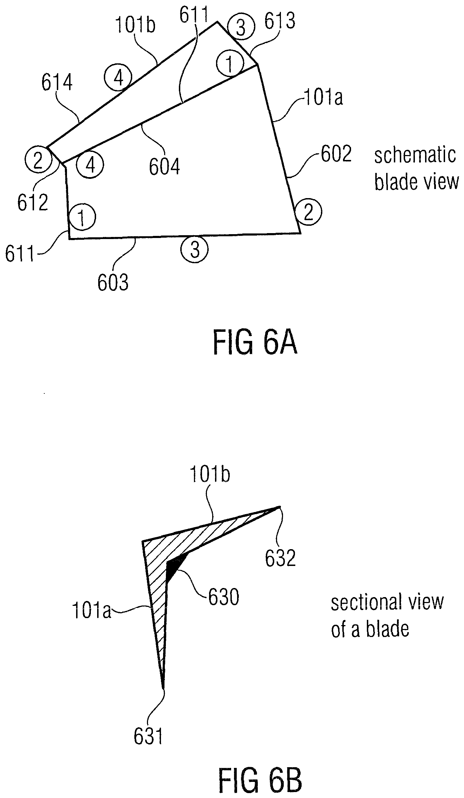

Fig. 6A shows a schematic blade view, i.e., a schematic view of a blade comprising the first portion 101a and the second portion 101b for a specific arrangement as is shown by means of Figs. 3A to 5B.

In particular, in one embodiment, the first portion includes the following features. A first side 601 mounted on the carrier, a second side 602 representing an outer boundary, a third side 603 forming a gas/droplet inflow opening together with a third side of an adjacent blade, and a fourth side 604 on which the second portion 101b is mounted. In the preferred embodiment, the second side is longer than the first side and/or the fourth side is longer than the third side. In one embodiment, the second portion 101b again includes a first side 611, on which the second portion is mounted on the first portion, a second side 612 mounted on the carrier, a third side, which is an outer boundary of the second portion, and a fourth side forming a gas outflow opening together with a fourth side of an adjacent second portion, the third side being larger than the second side and/or the fourth side being smaller than the first side. The obtuse angle is formed between the first portion and the second portion, i.e., on the edge 604 which coincides with the edge, or side, 611.

Fig. 6B shows a sectional view of a blade, a blade end comprising a pointed edge 631 and/or 632 on the first portion 101a or the second portion 101b. Alternatively or additionally, a reinforcement rib 630 is arranged at the location where the first portion and the second portion are connected. In addition, it is preferred for the material thickness to increase from the tip 631 toward that portion where the reinforcement rib 630 is arranged, and to decrease toward the other tip, or edge, 632.

Corresponding reinforcement ribs are also shown at 630 in Fig. 3A.

Fig. 8 shows an evaporator/compressor combination. It includes an evaporator base 802 comprising a feed inlet for the working liquid 804 to be evaporated. In addition, the droplet separator 806 is arranged, specifically within a central region of the evaporator, such that the first portions of the blades point toward the working liquid to be evaporated and that the second portions, which make the vapor which has been freed from the drops to rotate in the rotational direction 800, point toward a turbocompressor 808, i.e., a compressor for discharging the evaporated working liquid, e.g. to a condenser, as shown at 810.

Moreover, the second portions are shaped and arranged such that an evaporated working liquid sucked in by the turbocompressor 808 is made to rotate in a rotational direction, the turbocompressor being configured such that a compressor wheel is operated counter to the rotational direction 800. Thus, a higher mass flow within the compressed vapor, toward the condenser is achieved with the evaporator/compressor for maximum thermal thermal/refrigeration performance of a heat pump. However, if the compressor were to corotate the compressor wheel in the rotational direction, a higher compression ratio would be achieved instead of a maximum thermal/refrigeration performance.

In a method of producing a droplet separator, a first step comprises providing, for example by means of plastics injection molding, the first carrier comprising the first number of blades, and a second step comprises, e.g., again by means of plastics injection molding, providing the second carrier comprising the second number of blades. A third step then comprises joining the two parts. In one embodiment, said joining includes aligning the first carrier and the second carrier such that the first number of blades and the second number of blades are interleaved with one another, as shown in the top view of Fig. 7, for example. Subsequently, the first carrier and the second carrier are moved toward each other until the blades are arranged in an interleaved manner, as is schematically depicted, for example, by the linear movement in the central view of Fig. 7. Finally, a further step comprises twisting the carriers until the blades of the first and second carriers are aligned toward one another; at the same time or in a separate step, attachment of the first and second carriers, e.g., by means of adhesion, locking into place, etc., is achieved so as to have a completed droplet separator.

Even though some aspects have been described within the context of a device, it is understood that said aspects also represent a description of the corresponding method, so that a block or a structural component of a device is also to be understood as a corresponding method step or as a feature of a method step. By analogy therewith, aspects that have been described in connection with or as a method step also represent a description of a corresponding block or detail or feature of a corresponding device.

## Claims

1. Droplet separator comprising:
a first number of blades (101-108) arranged on a first carrier (100), each blade of the first number of blades comprising a first portion (101a) and a second portion (101b) which have a first obtuse angle (110) formed between them;
a second number of blades arranged on a second carrier (200), each blade (201-208) of the second number of blades comprising a first portion (201a) and a second portion (201b) which have a second obtuse angle (210) formed between them;
wherein the blades of the first number of blades extend radially outward from the first carrier and wherein the blades of the second number of blades extend radially outward from the second carrier,
**characterized in that** the first carrier (100) and the second carrier (200) are joined such that a blade (201) of the second number of blades is arranged between two blades (101, 102) of the first number of blades.

2. Droplet separator as claimed in claim 1,
wherein the first number of blades are arranged on the first carrier such that a direct path is open between two adjacent blades,
wherein the second number of blades are arranged on the second carrier (200) such that a direct path is open between two blades, and
wherein the first and second carriers are joined such that the direct path between two adjacent blades is blocked.

3. Droplet separator as claimed in any of the previous claims,
wherein the first obtuse angle and the second obtuse angle range from 120° to 150° or wherein the first obtuse angle and the second obtuse angle are identical.

4. Droplet separator as claimed in any of the previous claims,
comprising a first side which is exposed to drops, and comprising a second side on which gas freed from the drops flows, the first portions of the blades (101a, 201a) of the first and second numbers of blades being arranged in parallel with a gas flow on the first side, so that the gas flow (230) is redirected by the second portions of the blades.

5. Droplet separator as claimed in any of the previous claims,
wherein the first carrier is rotationally symmetric and the second portions are shaped such that the gas flow may be made to a rotate (800) by the second portions.

6. Droplet separator as claimed in any of the previous claims,
wherein the first number of blades and the second number of blades and the carriers are formed from a plastics injection molding material.

7. Droplet separator as claimed in any of the previous claims,
wherein the first carrier (100) and the second carrier (200) are configured such that the first carrier and the second carrier can be locked into place in relation to each other by a relative rotational motion, the blades of the first number and the blades of the second number being arranged, in the locked-in state, in an interleaved manner and being aligned such that the distances of a blade to the adjacent blades are identical.

8. Droplet separator as claimed in any of the previous claims,
wherein the first number of blades and the second number of blades are identical.

9. Droplet separator as claimed in any of the previous claims,
wherein the first portion of each blade comprises:
a first side (601) arranged on the carrier (100, 200), a second side (602) representing an outer boundary of the blade, a third side (603) forming a gas/droplet inflow opening together with a third side of an adjacent blade, and a fourth side (604) on which the second portion (101b, 201b) is mounted, the second side being longer than the first side or the fourth side being longer than the third side.

10. Droplet separator as claimed in any of the previous claims,
wherein the second portion (101b, 201b) comprises:
a first side (611), on which the second portion is mounted on the first portion, a second side (612) mounted on the carrier (100, 200), a third side, which is an outer boundary of the second portion, and a fourth side forming a gas outflow opening together with a fourth side of an adjacent second portion, the third side being larger than the second side or the fourth side being smaller than the first side.

11. Droplet separator as claimed in any of the previous claims,
wherein each blade has a pointed edge on one end of the first portion or of the second portion or has a reinforcement rib on a different end on which the first portion is connected to the second portion, or wherein a material thickness increases from the edge of the first or second portion toward the connection line between the first and second portions.

12. Droplet separator as claimed in any of the previous claims,
wherein the first number of blades and the second number of blades range from 20 to 30.

13. Droplet separator as claimed in any of the previous claims,
wherein the first carrier belongs to an upper side of the droplet separator, the first carrier having a round or vaulted shape in the upward direction,
wherein the second carrier belongs to a lower side of the droplet separator, the second carrier having a vaulted shape, which tapers toward a center, in the downward direction.

14. Evaporator/compressor combination, comprising:
an evaporator base (802) comprising a feed inlet (804) for working liquid to be evaporated;
the droplet separator as claimed in any of claims 1 to 13, the droplet separator being arranged such that the first portions point toward the working liquid to be evaporated;
a turbocompressor (808) for discharging the working liquid evaporated, the second portions of the droplet separator pointing toward the turbocompressor.

15. Evaporator/compressor combination as claimed in claim 14, wherein the second portions of the blades are shaped and arranged such that an evaporated working liquid sucked in by the turbocompressor is made to rotate in a rotational direction (800), the turbocompressor being configured to rotate a compressor wheel counter to the rotational direction (800).

16. Method of producing a droplet separator, comprising providing a first number of blades arranged on a first carrier, each blade of the first number of blades comprising a first portion and a second portion which have a first obtuse angle formed between them;
providing a second number of blades arranged on a second carrier, each blade of the second number of blades comprising a first portion and a second portion which have a second obtuse angle formed between them; and
joining the first carrier (100) and the second carrier (200) such that a blade (201) of the second number of blades is arranged between two blades (101, 102) of the first number of blades,
wherein the blades of the first number of blades extend radially outward from the first carrier and wherein the blades of the second number of blades extend radially outward from the second carrier.

17. Method as claimed in claim 16,
wherein said joining comprises:
aligning the first carrier (100) and the second carrier (200) such that the first number of blades and the second number of blades can be interleaved;
moving the first carrier and the second carrier toward each other until the blades are interleaved,
twisting the first carrier in relation to the second carrier until the blades of the first and second carriers are aligned toward one another; and
attaching the first and second carriers to each other.

18. Method as claimed in claim 16 or 17,
wherein the step of providing includes a plastics injection molding process.

19. Method as claimed in claim 17,
wherein said attaching takes place by locking the first carrier and the second carrier into place.

## Patentansprüche

1. Tröpfchenabscheider, der folgende Merkmale aufweist:
eine erste Anzahl von Blättern (101-108), die an einem ersten Träger (100) angeordnet sind, wobei jedes Blatt der ersten Anzahl von Blättern einen ersten Abschnitt (101a) und einen zweiten Abschnitt (101b) aufweist, die zwischen sich einen ersten stumpfen Winkel (110) bilden;
eine zweite Anzahl von Blättern, die an einem zweiten Träger (200) angeordnet sind, wobei jedes Blatt (201-208) der zweiten Anzahl von Blättern einen ersten Abschnitt (201a) und einen zweiten Abschnitt (201b) aufweist, die zwischen sich einen zweiten stumpfen Winkel (210) bilden,
wobei die Blätter der ersten Anzahl von Blättern sich von dem ersten Träger radial nach außen erstrecken und wobei die Blätter der zweiten Anzahl von Blättern sich von dem zweiten Träger radial nach außen erstrecken,
**dadurch gekennzeichnet, dass** der erste Träger (100) und der zweite Träger (200) derart verbunden sind, dass ein Blatt (201) der zweiten Anzahl von Blättern zwischen zwei Blättern (101, 102) der ersten Anzahl von Blättern angeordnet ist.

2. Tröpfchenabscheider gemäß Anspruch 1,
bei dem die erste Anzahl von Blättern an dem ersten Träger derart angeordnet ist, dass ein direkter Weg zwischen zwei benachbarten Blättern offen ist,
wobei die zweite Anzahl von Blättern an dem zweiten Träger (200) derart angeordnet ist, dass ein direkter Weg zwischen zwei Blättern offen ist, und
wobei der erste und der zweite Träger derart verbunden sind, dass der direkte Weg zwischen zwei benachbarten Blättern blockiert ist.

3. Tröpfchenabscheider gemäß einem der vorherigen Ansprüche,
bei dem der erste stumpfe Winkel und der zweite stumpfe Winkel zwischen 120° und 150° variieren oder bei dem der erste stumpfe Winkel und der zweite stumpfe Winkel identisch sind.

4. Tröpfchenabscheider gemäß einem der vorherigen Ansprüche,
der eine erste Seite aufweist, die Tropfen ausgesetzt ist, und der eine zweite Seite aufweist, auf der Gas strömt, das von den Tropfen befreit ist, wobei die ersten Abschnitte der Blätter (101a, 201a) der ersten und der zweiten Anzahl von Blättern parallel zu einem Gasfluss auf der ersten Seite angeordnet sind, so dass der Gasfluss (230) durch die zweiten Abschnitte der Blätter umgeleitet wird.

5. Tröpfchenabscheider gemäß einem der vorherigen Ansprüche,
bei dem der erste Träger rotationsymmetrisch ist und die zweiten Abschnitte derart geformt sind, dass der Gasfluss durch die zweiten Abschnitte dazu gebracht werden kann, sich zu drehen (800).

6. Tröpfchenabscheider gemäß einem der vorherigen Ansprüche,
bei dem die erste Anzahl von Blättern und die zweite Anzahl von Blättern und die Träger aus einem Kunststoffspritzgießmaterial gebildet sind.

7. Tröpfchenabscheider gemäß einem der vorherigen Ansprüche,
bei dem der erste Träger (100) und der zweite Träger (200) derart ausgebildet sind, dass der erste Träger und der zweite Träger durch eine relative Drehbewegung an ihren Ort in Bezug aufeinander verriegelt werden können, wobei die Blätter der ersten Anzahl und die Blätter der zweiten Anzahl in dem eingerasteten Zustand in einer verschachtelten Weise angeordnet sind und derart ausgerichtet sind, dass die Entfernungen eines Blatts zu den benachbarten Blättern identisch sind.

8. Tröpfchenabscheider gemäß einem der vorherigen Ansprüche,
bei dem die erste Anzahl von Blättern und die zweite Anzahl von Blättern gleich sind.

9. Tröpfchenabscheider gemäß einem der vorherigen Ansprüche,
bei dem der erste Abschnitt jedes Blatts Folgendes aufweist:
eine erste Seite (601), die an dem Träger (100, 200) angeordnet ist, eine zweite Seite (602), die eine äußere Begrenzung des Blatts darstellt, eine dritte Seite (603), die zusammen mit einer dritten Seite eines benachbarten Blatts eine Gas/Tröpfchen-Einfließöffnung bildet, und eine vierte Seite (604) an der der zweite Abschnitt (101b, 201b) befestigt ist, wobei die zweite Seite länger ist als die erste Seite oder die vierte Seite länger ist als die dritte Seite.

10. Tröpfchenabscheider gemäß einem der vorherigen Ansprüche,
bei dem der zweite Abschnitt (101b, 201b) Folgendes aufweist:
eine erste Seite (611), an der der zweite Abschnitt an dem ersten Abschnitt befestigt ist, eine zweite Seite (612), die an dem Träger (100, 200) befestigt ist, eine dritte Seite, die eine äußere Begrenzung des zweiten Abschnitts ist, und eine vierte Seite, die zusammen mit einer vierten Seite eines benachbarten zweiten Abschnitts eine Gasausfließöffnung bildet, wobei die dritte Seite größer ist als die zweite Seite oder die vierte Seite kleiner ist als die erste Seite.

11. Tröpfchenabscheider gemäß einem der vorherigen Ansprüche,
bei dem jedes Blatt einen spitz zulaufenden Rand an einem Ende des ersten Abschnitts oder des zweiten Abschnitts aufweist oder einen Verstärkungssteg an einem unterschiedlichem Ende aufweist, an dem der erste Abschnitt mit dem zweiten Abschnitt verbunden ist, oder bei dem eine Materialdicke von dem Rand des ersten oder zweiten Abschnitts in Richtung der Verbindungslinie zwischen dem ersten und dem zweiten Abschnitt zunimmt.

12. Tröpfchenabscheider gemäß einem der vorherigen Ansprüche,
bei dem die erste Anzahl von Blättern und die zweite Anzahl von Blättern zwischen 20 und 30 variiert.

13. Tröpfchenabscheider gemäß einem der vorherigen Ansprüche,
bei dem der erste Träger zu einer Oberseite des Tröpfchenabscheiders gehört, wobei der erste Träger eine runde oder gewölbte Form in der Aufwärtsrichtung aufweist,
wobei der zweite Träger zu einer Unterseite des Tröpfchenabscheiders gehört, wobei der zweite Träger eine gewölbte Form, die in Richtung einer Mitte schmaler wird, in der Abwärtsrichtung aufweist.

14. Verdampfer/Verdichter-Kombination, die folgende Merkmale aufweist:
eine Verdampferbasis (802) mit einem Zuführeinlass (804) zu verdampfende Arbeitsflüssigkeit;
den Tröpfchenabscheider gemäß einem der Ansprüche 1 bis 13, wobei der Tröpfchenabscheider derart angeordnet ist, dass die ersten Abschnitte in Richtung der zu verdampfenden Arbeitsflüssigkeit zeigen;
einen Turboverdichter (808) zum Abgeben der verdampften Arbeitsflüssigkeit, wobei die zweiten Abschnitte des Tröpfchenabscheiders in Richtung des Turboverdichters zeigen.

15. Verdampfer/Verdichter-Kombination gemäß Anspruch 14,
bei der die zweiten Abschnitte der Blätter derart geformt und angeordnet sind, dass eine verdampfte Arbeitsflüssigkeit, die durch den Turboverdichter eingesaugt wird, dazu gebracht wird, sich in einer Rotationsrichtung (800) zu drehen, wobei der Turboverdichter ausgebildet ist, um ein Verdichterrad entgegengesetzt zu der Rotationsrichtung (800) zu drehen.

16. Verfahren zum Herstellen eines Tröpfchenabscheiders, das folgende Schritte aufweist:
Bereitstellen einer ersten Anzahl von Blättern, die an einem ersten Träger angeordnet sind, wobei jedes Blatt der ersten Anzahl von Blättern einen ersten Abschnitt und einen zweiten Abschnitt aufweist, die zwischen sich einen ersten stumpfen Winkel bilden;
Bereitstellen einer zweiten Anzahl von Blättern, die an einem zweiten Träger angeordnet sind, wobei jedes Blatt der zweiten Anzahl von Blättern einen ersten Abschnitt und einen zweiten Abschnitt aufweist, die zwischen sich einen zweiten stumpfen Winkel bilden; und
Verbinden des ersten Trägers (100) und des zweiten Trägers (200) derart, dass ein Blatt (201) der zweiten Anzahl von Blättern zwischen zwei Blättern (101, 102) der ersten Anzahl von Blättern angeordnet ist,
wobei die Blätter der ersten Anzahl von Blättern sich von dem ersten Träger radial nach außen erstrecken und wobei die Blätter der zweiten Anzahl von Blättern sich von dem zweiten Träger radial nach außen erstrecken.

17. Verfahren gemäß Anspruch 16,
bei dem das Verbinden folgende Schritte aufweist:
Ausrichten des ersten Trägers (100) und des zweiten Trägers (200) derart, dass die erste Anzahl von Blättern und die zweite Anzahl von Blättern verschachtelt sein können;
Bewegen des ersten Trägers und des zweiten Trägers aufeinander zu, bis die Blätter verschachtelt sind,
Verdrehen des ersten Trägers in Bezug auf den zweiten Träger, bis die Blätter des ersten und des zweiten Trägers zueinander ausgerichtet sind; und
Anbringen des ersten und des zweiten Trägers aneinander.

18. Verfahren gemäß Anspruch 16 oder 17,
bei dem der Schritt des Bereitstellens einen Kunststoffspritzgießvorgang aufweist.

19. Verfahren gemäß Anspruch 17,
bei dem das Anbringen durch Verriegeln des ersten Trägers und des zweiten Trägers an ihrem Ort stattfindet.

## Revendications

1. Séparateur de gouttelettes, comprenant:
un premier nombre de lames (101 à 108) disposées sur un premier support (100), chaque lame du premier nombre de lames comprenant une première partie (101a) et une deuxième partie (101b) qui présentent un premier angle obtus (110) formé entre elles;
un deuxième nombre de lames disposées sur un deuxième support (200), chaque lame (201 à 208) du deuxième nombre de lames comprenant une première partie (201a) et une deuxième partie (201b) qui présentent un deuxième angle obtus (210) formé entre elles,
dans lequel les lames du premier nombre de lames s'étendent radialement vers l'extérieur du premier support et dans lequel les lames du deuxième nombre de lames s'étendent radialement vers l'extérieur du deuxième support,
**caractérisé par le fait que**
le premier support (100) et le deuxième support (200) sont unis de sorte qu'une lame (201) du deuxième nombre de lames soit disposée entre deux lames (101, 102) du premier nombre de lames.

2. Séparateur de gouttelettes selon la revendication 1,
dans lequel le premier nombre de lames sont disposées sur le premier support de sorte qu'un trajet direct soit ouvert entre deux lames adjacentes,
dans lequel le deuxième nombre de lames sont disposées sur le deuxième support (200) de sorte qu'un trajet direct soit ouvert entre deux lames, et
dans lequel les premier et deuxième supports sont unis de sorte que soit bloqué le trajet direct entre deux lames adjacentes.

3. Séparateur de gouttelettes selon l'une quelconque des revendications précédentes,
dans lequel le premier angle obtus et le deuxième angle obtus varient de 120° à 150° ou dans lequel le premier angle obtus et le deuxième angle obtus sont identiques.

4. Séparateur de gouttelettes selon l'une quelconque des revendications précédentes,
comprenant un premier côté qui est exposé aux gouttes, et comprenant un deuxième côté sur lequel circule le gaz libéré des gouttes, les premières parties des lames (101a, 201a) des premier et deuxième nombres de lames étant disposées en parallèle avec un flux de gaz sur le premier côté, de sorte que le flux de gaz (230) soit redirigé par les deuxièmes parties des lames.

5. Séparateur de gouttelettes selon l'une quelconque des revendications précédentes,
dans lequel le premier support est symétrique en rotation et les deuxièmes parties sont formées de sorte que la circulation de gaz puisse être mise en rotation (800) par les deuxièmes parties.

6. Séparateur de gouttelettes selon l'une quelconque des revendications précédentes,
dans lequel le premier nombre de lames et le deuxième nombre de lames et les supports sont formés en un matériau de moulage par injection de matière plastique.

7. Séparateur de gouttelettes selon l'une quelconque des revendications précédentes,
dans lequel le premier support (100) et le deuxième support (200) sont configurés de sorte que le premier support et le deuxième support puissent être verrouillés en place l'un par rapport à l'autre par un mouvement de rotation relatif, les lames du premier nombre et les lames du deuxième nombre étant disposées, à l'état verrouillé, de manière entrelacée et alignées de sorte que les distances entre une lame et les lames adjacentes soient identiques.

8. Séparateur de gouttelettes selon l'une quelconque des revendications précédentes,
dans lequel le premier nombre de lames et le deuxième nombre de lames sont identiques.

9. Séparateur de gouttelettes selon l'une quelconque des revendications précédentes,
dans lequel la première partie de chaque lame comprend:
un premier côté (601) disposé sur le support (100, 200), un deuxième côté (602) représentant une limite extérieure de la lame, un troisième côté (603) formant une ouverture d'entrée de gaz/gouttelettes ensemble avec un troisième côté d'une lame adjacente, et un quatrième côté (604) sur lequel est montée la deuxième partie (101b, 201b), le deuxième côté étant plus long que le premier côté ou le quatrième côté étant plus long que le troisième côté.

10. Séparateur de gouttelettes selon l'une quelconque des revendications précédentes,
dans lequel la deuxième partie (101b, 201b) comprend:
un premier côté (611) sur lequel la deuxième partie est montée sur la première partie, un deuxième côté (612) monté sur le support (100, 200), un troisième côté qui est une limite extérieure de la deuxième partie, et un quatrième côté formant une ouverture de sortie de gaz ensemble avec un quatrième côté d'une deuxième partie adjacente, le troisième côté étant plus grand que le deuxième côté ou le quatrième côté étant plus petit que le premier côté.

11. Séparateur de gouttelettes selon l'une quelconque des revendications précédentes,
dans lequel chaque lame présente un bord pointu à une extrémité de la première partie ou de la deuxième partie ou présente une nervure de renforcement à une extrémité différente à laquelle la première partie est raccordée à la deuxième partie, ou dans lequel une épaisseur de matériau augmente à partir du bord de la première ou de la deuxième partie vers la ligne de connexion entre les première et deuxième parties.

12. Séparateur de gouttelettes selon l'une quelconque des revendications précédentes,
dans lequel le premier nombre de lames et le deuxième nombre de lames varie de 20 à 30.

13. Séparateur de gouttelettes selon l'une quelconque des revendications précédentes,
dans lequel le premier support appartient à un côté supérieur du séparateur de gouttelettes, le premier support présentant une forme arrondie ou voûtée dans la direction vers le haut,
dans lequel le deuxième support appartient à un côté inférieur du séparateur de gouttelettes, le deuxième support présentant une forme voûtée qui s'effile vers un centre dans la direction vers le bas.

14. Combinaison d'évaporateur/compresseur, comprenant:
une base d'évaporateur (802) comprenant une entrée d'alimentation (804) de liquide de travail à évaporer;
le séparateur de gouttelettes selon l'une quelconque des revendications 1 à 13, le séparateur de gouttelettes étant disposé de sorte que les premières parties pointent vers le liquide de travail à évaporer;
un turbocompresseur (808) destiné à évacuer le liquide de travail évaporé, les deuxièmes parties du séparateur de gouttelettes pointant vers le turbocompresseur.

15. Combinaison d'évaporateur/compresseur selon la revendication 14,
dans lequel les deuxièmes parties des lames sont formées et disposées de sorte qu'un liquide de travail évaporé aspiré par le turbocompresseur soit mis en rotation dans un sens de rotation (800), le turbocompresseur étant configuré pour faire tourner une roue de compresseur à l'encontre du sens de rotation (800).

16. Procédé de production d'un séparateur de gouttelettes, comprenant le fait de
prévoir un premier nombre de lames disposées sur un premier support, chaque lame du premier nombre de lames comprenant une première partie et une deuxième partie qui présentent un premier angle obtus formé entre elles;
prévoir un deuxième nombre de lames disposées sur un deuxième support, chaque lame du deuxième nombre de lames comprenant une première partie et une deuxième partie présentant un deuxième angle obtus formé entre elles; et
unir le premier support (100) et le deuxième support (200) de sorte qu'une lame (201) du deuxième nombre de lames soit disposée entre deux lames (101, 102) du premier nombre de lames,
dans lequel les lames du premier nombre de lames s'étendent radialement vers l'extérieur à partir du premier support et dans lequel les lames du deuxième nombre de lames s'étendent radialement vers l'extérieur à partir du deuxième support.

17. Procédé selon la revendication 16,
dans lequel ladite union comprend le fait de:
aligner le premier support (100) et le deuxième support (200) de sorte que le premier nombre de lames et le deuxième nombre de lames puissent être entrelacées;
déplacer le premier et le deuxième support l'un vers l'autre jusqu'à ce que les lames soient entrelacées,
tordre le premier support vers le deuxième support jusqu'à ce que les lames des premier et deuxième supports soient alignées l'une vers l'autre; et
fixer les premier et deuxième supports l'un à l'autre.

18. Procédé selon la revendication 16 ou 17,
dans lequel l'étape de prévision comporte un processus de moulage par injection de matière plastique.

19. Procédé selon la revendication 17,
dans lequel ladite fixation a lieu en verrouillant le premier support et le deuxième support en place.
